Europäisches Patentamt

European Patent Office

Office européen des brevets

(11) Veröffentlichungsnummer: **0 212 057**
A1

# (12) EUROPÄISCHE PATENTANMELDUNG

(21) Anmeldenummer: 86104755.3

(22) Anmeldetag: 08.04.86

(51) Int. Cl.⁴: **A 47 J 19/06**

(30) Priorität: 14.08.85 DE 3529116

(43) Veröffentlichungstag der Anmeldung: 04.03.87
Patentblatt 87/10

(84) Benannte Vertragsstaaten: **AT BE CH DE FR GB IT LI LU NL SE**

(71) Anmelder: **Holger, Alexi, Röntgenstrasse 11, D-6744 Kandel (DE)**

(72) Erfinder: **Holger, Alexi, Röntgenstrasse 11, D-6744 Kandel (DE)**

(54) Knoblauchpresse- mit Spindelbetrieb.

(57) Zur Erleichterung der haushaltlichen Arbeit im Umgang mit Knoblauch, zur Erreichung einer optimalen Ausbeute aus der zu pressenden Knoblauchzehe in einem Arbeitsgang, zum Pressen einer beliebigen Anzahl Knoblauchzehen hintereinander ohne Verstopfen der Presse, zur Sicherstellung einer für alle Zwecke geeigneten Konsistenz aus dem gepreßten Knoblauch, wird die Erfindung: Knoblauchpresse mit Spindelbetrieb – eingesetzt. Die Lösung der Aufgabe ist durch das Zusammenwirken von Gehäuseteil, Spindel mit Bolzen, Gehäuseabschlußteil und Handgriff erreicht.

Die Erfindung preßt mit einer sehr hohen Ausbeute (ca. 98%) in einem Arbeitsgang und erzielt vom Ergebnis und von der Handhabung her, eine hohe persönliche Befriedigung. Eine sehr große Reinigungsfreundlichkeit zeichnet das Gerät besonders aus.

Gehäuseteil — Spindel mit Bolzen — Gehäuseabschlußteil — Handgriff

Beschreibung:

_____

Titel:

Knoblauchpresse - mit Spindelbetrieb.

Gattung des Anmeldungsgegenstandes:

Die Erfindung betrifft ein Gerät für den haushaltlichen und gastronomischen Gebrauch nach dem Oberbegriff des Anspruchs 1.

Angaben zur Gattung:

Die vorgestellte Erfindung gehört zur Gattung der Haushaltsgeräte.

Stand der Technik:

Ein spezielles Gerät für die Problemlösung nach dem Oberbegriff des Anspruchs 1 ist nicht bekannt.

Aufgabe:

Die Erfindung soll einerseits das Pressen von Knoblauch auf optimale Art lösen, das Pressen einer beliebigen Anzahl Knoblauchzehen hintereinander ohne Verstopfen der Presse ermöglichen, als Pressergebnis eine für alle Zwecke geeignete Konsistenz des gepressten Knoblauchs ergeben, eine maximale Ausbeute aus dem zu pressenden Knoblauch in einem Arbeitsgang garantieren und andererseits die haushaltliche Arbeit im Umgang mit Knoblauch erleichtern, sowie leicht zu reinigen sein.

Lösung:

Diese Aufgabe ist mit einem gattungsmäßigen Gerät durch die kennzeichnenden Merkmale der Ansprüche 1,2,3,4 gelöst.

Weitere Ausgestaltung der Erfindung:

Um das in der Aufgabe gestellte Problem zu lösen, ist das Gehäuseende des Gehäuseteils mit kleinen runden Austrittsöffnungen, die von der Gehäuseinnenseite angephast sind, versehen, mündet das Spindelende in einen Bolzen der den Durchmesser des Gehäuseinneren ausfüllt, ist die Spindel durch das Gehäuseabschlußteil geführt, ist der Spindelanfang mit einem aufgesteckten Handgriff versehen.

0212057

## 2

Beschreibung eines Ausführungsbeispiels:

Ein Ausführungsbeispiel der Erfindung ist in den Zeichnungen schematisch dargestellt und wird im folgenden näher beschrieben. Es zeigen:
Blatt 1 das Gehäuseteil mit vergrößert dargestellten, von der Gehäuseinnenseite angephasten Austrittsöffnungen.
Blatt 2 Spindel mit Bolzen und Handgriff.
Blatt 3 das Gehäuseabschlußteil.
Blatt 4 die Gesamtansicht der Knoblauchpresse mit Spindelbetrieb im pressbereiten Zustand.
Die Wirkungsweise der dargestellten Erfindung ist folgende:
Die zu pressende Knoblauchzehe wird in das Gehäuseteil eingelegt, Spindel mit Bolzen, die durch das Gehäuseabschlußteil geführt ist, in das Gehäuseteil eingeführt. Das Gehäuseabschlußteil wird mittels Drehbewegung auf das Gehäuseteil geschraubt. Durch Drehen des mit der Spindel durch Aufstecken verbundenen Handgriffes wird die Knoblauchzehe mit Hilfe des Bolzens durch die von der Gehäuseinnenseite angephasten Austrittsöffnungen des Gehäuseendes gepresst. Das Herabdrehen des Gehäuseabschlußteils vom Gehäuseteil erlaubt ein problemloses Auseinanderbauen der Knoblauchpresse für den Reinigungsfall.

0212057

03/86

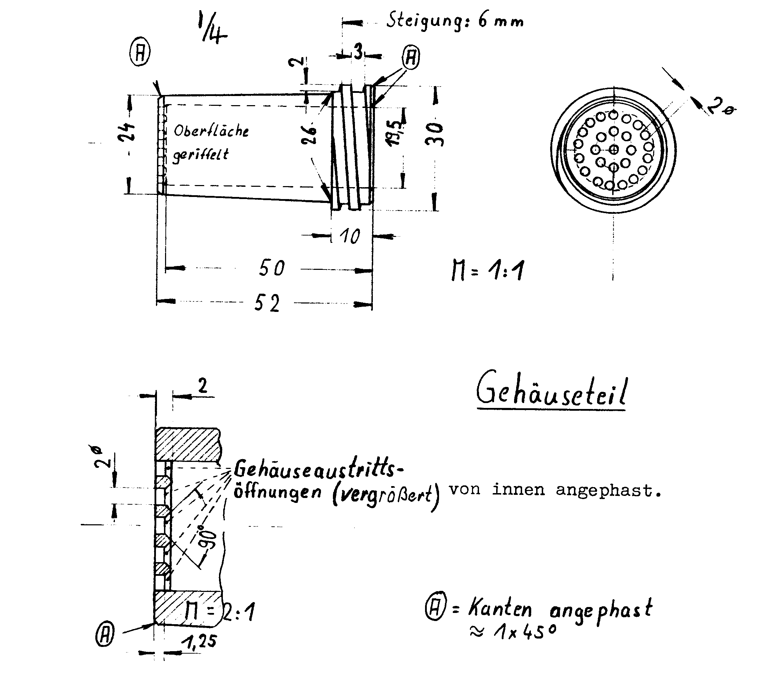

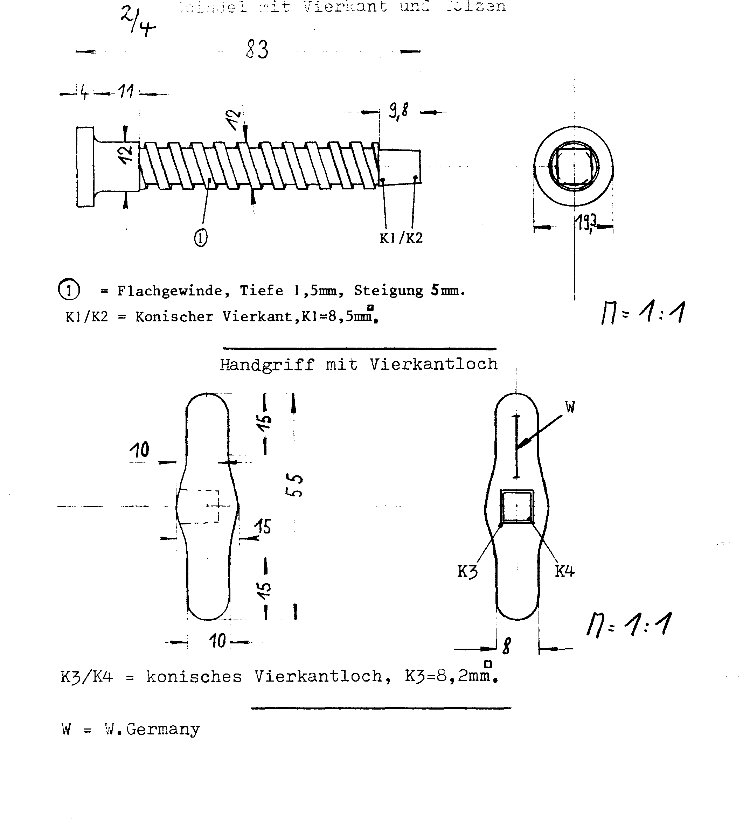

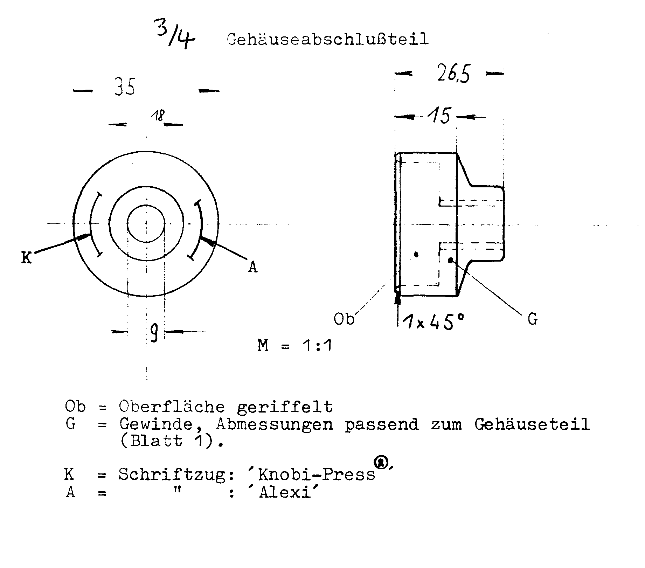

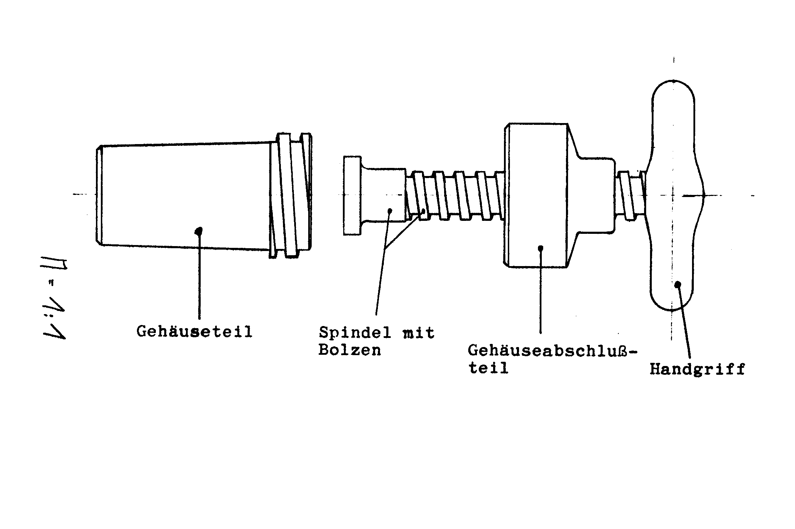

Patentansprüche:

Oberbegriff:

1. Knoblauchpresse - mit Spindelbetrieb, Kennzeichnender Teil:

dadurch gekennzeichnet, daß die Knoblauchpresse aus einem Gehäuseteil, einer Spindel mit Gehäuseabschlußteil und Handgriff besteht.

Oberbegriff des Unteranspruchs:

2. Knoblauchpresse nach Anspruch 1, Kennzeichnender Teil des Unteranspruchs:

dadurch gekennzeichnet, daß das Gehäuseende des Gehäuseteils mit kleinen runden Austrittsöffnungen, die von der Gehäuseinnenseite angephast sind, versehen ist.

Oberbegriff des Unteranspruchs:

3. Knoblauchpresse nach Anspruch 1, Kennzeichnender Teil des Unteranspruchs:

dadurch gekennzeichnet, daß das Spindelende in einen Bolzen mündet, der den Innendurchmesser des Gehäuseteils ausfüllt, der Spindelanfang mit einem aufgesteckten Handgriff versehen ist.

Oberbegriff des Unteranspruchs:

4. Knoblauchpresse nach Anspruch 1, Kennzeichnender Teil des Unteranspruchs:

dadurch gekennzeichnet, daß die Spindel durch das Gehäuseabschlußteil geführt ist.

**1/4**

Ⓐ

Steigung: 6 mm

Oberfläche geriffelt

M = 1:1

Gehäuseteil

Gehäuseaustritts-öffnungen (vergrößert) von innen angephast.

Ⓐ = Kanten angephast ≈ 1 x 45°

M = 2:1

Spindel mit Vierkant und Bolzen

① = Flachgewinde, Tiefe 1,5mm, Steigung 5mm.
K1/K2 = Konischer Vierkant,K1=8,5mm$^{\square}$.

$\Pi = 1:1$

## Handgriff mit Vierkantloch

K3/K4 = konisches Vierkantloch, K3=8,2mm$^{\square}$.

$\Pi = 1:1$

W = W.Germany

0212057

3/4    Gehäuseabschlußteil

— 35 —

— 18 —

— 26,5 —

— 15 —

K          A

Ob        1x45°        G

9

M = 1:1

Ob = Oberfläche geriffelt
G  = Gewinde, Abmessungen passend zum Gehäuseteil
     (Blatt 1).

K  = Schriftzug: ´Knobi-Press®´
A  =      "      : ´Alexi´

Handgriff

Gehäuseabschlußteil

Spindel mit
Bolzen

Gehäuseteil

M = 1:1

## Europäisches Patentamt

# EUROPÄISCHER RECHERCHENBERICHT

Nummer der Anmeldung

EP 86 10 4755

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 334 956 (F & H HOLDINGS) <br> * Das ganze Dokument * <br><br> --- | 1-4 | A 47 J 19/06 |
| X | EP-A-0 134 093 (MIKE & KREMMEL LTD.) <br> * Das ganze Dokument * <br><br> --- | 1-4 | |
| A | US-A-2 818 797 (BALLOR) <br> * Das ganze Dokument * <br><br> ----- | 1-4 | |

|  | RECHERCHIERTE SACHGEBIETE (Int. Cl.4) |
|---|---|
|  | A 47 J |

Der vorliegende Recherchenbericht wurde für alle Patentansprüche erstellt.

| Recherchenort <br> DEN HAAG | Abschlußdatum der Recherche <br> 13-11-1986 | Prüfer <br> SCHARTZ J. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82